# EUROPEAN PATENT APPLICATION

(11) **EP 4 422 222 A1**
(43) Date of publication of application: **28.08.2024**
(21) Application number: 22882895.0
(22) Date of filing: 19.10.2022
(51) Int. Cl.: H04W 4/20

(54) **UAI SENDING METHOD, UAI RECEIVING METHOD, DEVICE, AND READABLE STORAGE MEDIUM**

(30) Priority: 21.10.2021 CN 202111229547
(71) Applicant: VIVO MOBILE COMMUNICATION CO., LTD., Dongguan, Guangdong 523863 (CN)
(72) Inventor: LIU, Xuanbing, Dongguan, Guangdong 523863 (CN)
(74) Representative: Lavoix
(86) International application number: PCT/CN2022/126136
(87) International publication number: WO 2023/066290

(57) **Abstract**

This application pertains to the field of communication technologies, and specifically relates to a UAI transmission method and device and reception method and device, and a readable storage medium. The method includes: transmitting, by a terminal, a target UAI in a case that a target condition is met; where the target condition is associated with target UAI and/or a prohibit timer related to the target UAI, the target UAI includes one or more of a periodic Gap preference, an aperiodic Gap preference, and a preference for leaving a connected state, and the prohibit timer is associated with one or more periodic Gap preferences, and/or the prohibit timer is associated with one or more aperiodic Gap preferences.

## Description

### CROSS-REFERENCE TO RELATED APPLICATIONS

This application claims priority to Chinese Patent Application No. 202111229547.5, filed in China on October 21, 2021, which is incorporated herein by reference in its entirety.

### TECHNICAL FIELD

This application pertains to the field of communication technologies, and specifically relates to a UAI transmission method and device and reception method and device, and a readable storage medium.

### BACKGROUND

For network switching in multi-card terminals, user equipment (User Equipment, UE) requests a preference (Gap) or to leave a connected state based on a UE assistance information (UE assistance information, UAI) process. In a case that the UE cannot transmit the assistance information to the network in a timely manner, it may lead to delays in tasks of the UE in a target network, affecting user experience.

### SUMMARY

The purpose of embodiments of this application is to provide a UAI transmission method and device and reception method and device, and a readable storage medium to solve the problem that in a case that a multi-card terminal cannot transmit assistance information to a network in a timely manner during network switching, it may cause delays in tasks of the UE in a target network, affecting user experience.

A first aspect provides a UE assistance information UAI transmission method, including:
transmitting, by a terminal, target UAI in a case that a target condition is met.

The target condition is associated with the target UAI and/or a prohibit timer associated with the target UAI, the target UAI includes one or more of a periodic gap Gap preference, an aperiodic Gap preference, and a preference for leaving a connected state, and the prohibit timer is associated with one or more periodic Gap preferences, and/or the prohibit timer is associated with one or more aperiodic Gap preferences.

A second aspect provides a UAI reception method, including:
receiving, by a network device, target UAI transmitted by a terminal, where the target UAI is transmitted in a case that the terminal meets a target condition.

The target condition is associated with the target UAI and/or a prohibit timer associated with the target UAI, the target UAI includes one or more of a periodic gap Gap preference, an aperiodic Gap preference, and a preference for leaving a connected state, and the prohibit timer is associated with one or more periodic Gap preferences, and/or the prohibit timer is associated with one or more aperiodic Gap preferences.

A third aspect provides a UAI transmission apparatus, including:
a first transmission module configured to transmit target UAI in a case that a target condition is met.

The target condition is associated with the target UAI and/or a prohibit timer associated with the target UAI, the target UAI includes one or more of a periodic Gap preference, an aperiodic Gap preference, and a preference for leaving a connected state, and the prohibit timer is associated with one or more periodic Gap preferences, and/or the prohibit timer is associated with one or more aperiodic Gap preferences.

A fourth aspect provides a UAI reception apparatus, including:
a reception module, configured for a network device to receive target UAI transmitted by a terminal, where the target UAI is transmitted in a case that the terminal meets a target condition.

The target condition is associated with the target UAI and/or a prohibit timer associated with the target UAI, the target UAI includes one or more of a periodic gap Gap preference, an aperiodic Gap preference, and a preference for leaving a connected state, and the prohibit timer is associated with one or more periodic Gap preferences, and/or the prohibit timer is associated with one or more aperiodic Gap preferences.

According to a fifth aspect, a terminal is provided, including a processor, a memory, and a program stored in the memory and capable of running on the processor, where when the program is executed by the processor, the steps of the method according to the first aspect are implemented.

According to a sixth aspect, a network device is provided, including a processor, a memory, and a program stored in the memory and capable of running on the processor, where when the program is executed by the processor, the steps of the method according to the second aspect are implemented.

According to a seventh aspect, a readable storage medium is provided, where the readable storage medium stores a program or instructions, and when the program or instructions are executed by a processor, the steps of the method according to the first aspect or the second aspect are implemented.

According to an eighth aspect, a computer program product is provided, where the computer program product is stored in a non-transitory storage medium, and the computer program product is executed by at least one processor to implement the steps of the method according to the first aspect or the second aspect.

According to a ninth aspect, a chip is provided, where the chip includes a processor and a communication interface, the communication interface is coupled to the processor, and the processor is configured to run a program or instructions to implement the method according to the first aspect or the second aspect.

According to a tenth aspect, a communication device is provided and configured to implement the steps of the method according to the first aspect or the steps of the method according to the second aspect.

In the embodiments of this application, a terminal transmits target UAI in a case that a target condition related to target UAI and/or a prohibit timer associated with the target UAI is met, where the prohibit timer is associated with one or more periodic Gap preferences and/or aperiodic Gap preferences. Thus, in a case that the UE reports multiple pieces of assistance information or performs reporting multiple times, the delay in reporting assistance information is reduced through reasonable control of the prohibit timer, avoiding an impact on the multi-card user experience.

### BRIEF DESCRIPTION OF DRAWINGS

FIG. 1 is a schematic diagram of a wireless communication architecture according to an embodiment of this application;
FIG. 2a is a schematic flowchart of a UAI transmission method according to an embodiment of this application;
FIG. 2b is a schematic flowchart of a UAI reception method according to an embodiment of this application;
FIG. 3a is a schematic structural diagram of a UAI transmission apparatus according to an embodiment of this application;
FIG. 3b is a schematic structural diagram of a UAI reception apparatus according to an embodiment of this application;
FIG. 4 is a structural diagram of a terminal according to an embodiment of this application; and
FIG. 5 is a structural diagram of a network device according to an embodiment of this application.

### DETAILED DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

The terms "first", "second", and the like in the specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type and do not limit the quantity of objects. For example, there may be one or a plurality of first objects. In addition, "and/or" in the specification and claims represents at least one of connected objects, and the character "/" generally indicates that the contextually associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. However, in the following descriptions, a new radio (New Radio, NR) system is described for an illustration purpose, and NR terms are used in most of the following descriptions, although these technologies may also be applied to other applications than an NR system application, for example, the 6^{th} generation (6th Generation, 6G) communication system.

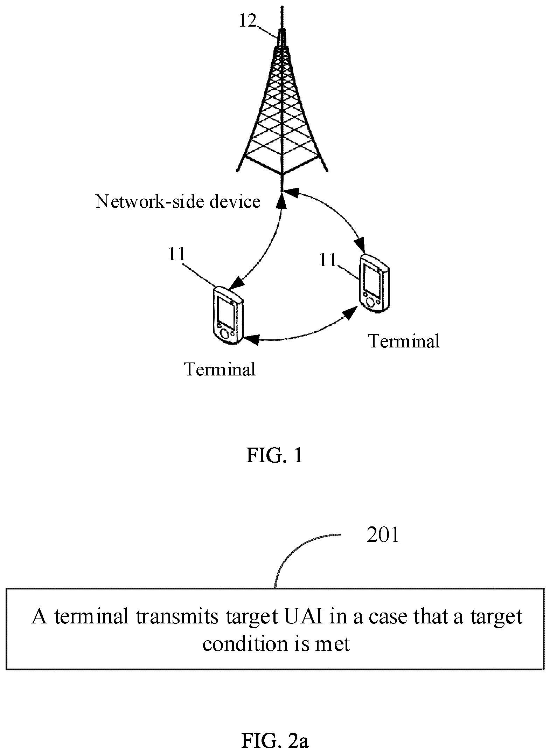

FIG. 1 is a block diagram of a wireless communication system to which embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet personal computer (Tablet Personal Computer, TPC), a laptop computer (Laptop Computer, LC) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device, WD), vehicle user equipment (Vehicle User Equipment, VUE), or pedestrian user equipment (Pedestrian User Equipment, PUE), a smart appliance (a home appliance with a wireless communication function, for example, a refrigerator, a television, a washing machine, or furniture). The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, a game console, or the like. It should be noted that the terminal 11 is not limited to any specific type in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a WLAN (Wireless Local Area Networks, WLAN) access point, a wireless fidelity (Wireless Fidelity, Wi-Fi) node, a transmission reception point (Transmitting Receiving Point, TRP), or another appropriate term in the art. The base station is not limited to a specific technical term as long as the same technical effect is achieved. It should be noted that the base station in the NR system is taken merely as an example in the embodiments of this application, but the base station is not limited to any specific type.

To better understand the technical solutions of the embodiments of this application, the following content is introduced first:

### Multi-card terminal

Currently, in addition to single-card terminals, dual-card or multi-card terminals also exist on the market, which are collectively referred to as multi-card terminals.

Multi-card terminals can contain multiple UEs, and these UEs are called Multi-SIM UEs. It should be noted that the UE can be considered as a contracting entity. Multiple contracting entities can be configured on a terminal device. Contracting entities can be represented by a subscriber identity module (Subscriber Identity Module, SIM) card. One SIM card corresponds to one contracting entity of a network. The SIM card stores the identity of the contracting entity, that is, the identity of the UE, such as the subscription permanent identifier (Subscription Permanent Identifier, SUPI) and the international mobile subscriber identity (International Mobile Subscription Identity, IMSI). Therefore, in a case that multiple SIM cards are inserted into a terminal or information of multiple electric SIM cards is configured, the terminal can form different UEs with different contracting entities.

The capabilities of a multi-card terminal can be single transmission single reception, single transmit dual reception, dual transmission dual reception, and the like.

One characteristic of multi-card terminals is that they can reside in multiple networks simultaneously, but the implementation methods of multi-card terminals differ. Some terminals can perform transmission and reception in multiple networks simultaneously without affecting each other.

However, there is also a type of multi-card terminal that, although it can reside in multiple networks simultaneously, may use a time-division method to reside in two networks, that is, reside in network A for a period of time to listen for paging (paging) from network A, and reside in network B for another period of time to listen for paging from network B; or
is connected to network A for a period of time to establish a connection or transmit/receive data, and is connected to network B for another period of time to receive paging; or
is connected to network A for a period of time to receive data, and is connected to network B for another period of time to establish a connection or transmit/receive data.

Some multi-card terminals that support dual transmission dual reception can perform transmission and reception simultaneously in multiple networks on specific frequency bands without affecting each other. On other frequency bands, they may use a time-division method to transmit/receive data on two networks.

### UE assistance information

For the purpose of saving power or preventing overheating, the UE can transmit a preference indication to the network in a UAI message. The network determines whether to change the configuration of the UE. For example, the UE suggests that the network configure fewer carriers, fewer multiple-in multiple-out (Multiple-In Multiple-Out, MIMO) layers, or a longer discontinuous reception cycle (Discontinuous Reception cycle, DRX cycle). The network may adjust the configuration of the UE accordingly. However, the network may not respond to the request of the UE.

After the UE transmits the UE assistance information message, the corresponding prohibit timer is started. The UE can transmit the UE assistance information message only when the prohibit timer is not running. If the UE has previously transmitted UE assistance information, the UE can transmit updated assistance information when the prohibit timer is not running. That is to say, the UE cannot repeatedly transmit the same assistance information.

### Multi-card assistance information

The UE can transmit multi-card assistance information to report a Gap preference and request the network to configure a Gap.

The network allows the configuration of multiple Gap patterns (Pattern) for the multi-card purpose. In R17, two periodic gaps and one aperiodic Gap can be supported.

The UE is allowed to transmit assistance information to establish or release a periodic or aperiodic Gap.

The UE can indicate in the assistance information that it wants to leave the radio resource control (RRC)_connected (CONNECTED) state. After the UE transmits this assistance information, if the "configured time" Timer (that is, a pre-configured duration timer) expires without receiving a response from the network, the UE can enter an idle (IDLE) state.

For the UE preference aimed at saving power, the UE can transmit the UE assistance information message only when the prohibit timer is not running. If the UE has previously transmitted UE assistance information, the UE can transmit updated assistance information when the prohibit timer is not running. Considering that it is not a problem for the UE to continue working based on the current configuration, the message transmission delay caused by the prohibit timer will not cause problems.

However, in a case that the UE requests, for the purpose of network switching in multi-card terminals based on a UE assistance information process, a Gap preference or a preference for leaving a connected state, if the UE cannot transmit the assistance information to the network in a timely manner, it may cause delays in a task of the UE in network B, affecting user experience.

The following details the methods and apparatus in the embodiments of this application through specific implementations and their application scenarios with reference to the accompany drawings.

Referring to FIG. 2a, an embodiment of this application provides a UAI transmission method, and the method is executed by a multi-card terminal (hereinafter referred to as the terminal), the following specific step is included.

Step 201. A terminal transmits target UAI to a network device in a case that a target condition is met.

In the embodiment of this application, the target condition is associated with the target UAI and/or a prohibit timer associated with the target UAI, the target UAI includes one or more of a periodic Gap preference, an aperiodic Gap preference, and a preference for leaving a connected state, and the prohibit timer is associated with one or more periodic Gap preferences, and/or the prohibit timer is associated with one or more aperiodic Gap preferences.

In a possible implementation, the target UAI includes multi-card UAI, and the multi-card UAI is used by a multi-card terminal to send multi-card related assistance information to the network. The multi-card UAI includes one or more of the following:
a periodic Gap preference;
an aperiodic Gap preference; and
a preference for leaving a connected state.

Thus, in a case that the UE reports multiple pieces of assistance information or performs reporting multiple times, the delay in reporting assistance information is reduced through reasonable control of the prohibit timer, avoiding an impact on the multi-card user experience.

In a possible implementation, in a case that a Gap preference associated with the prohibit timer is a periodic Gap preference, the prohibit timer includes a first prohibit timer; and
in a case that the Gap preference associated with the prohibit timer is an aperiodic Gap preference, the prohibit timer includes a second prohibit timer.

In the embodiments of this application, two types of prohibit timers can be set, one for controlling the transmission of UAI containing a periodic Gap preference, and one for controlling the transmission of UAI containing an aperiodic Gap preference.

It should be noted that the first prohibit timer and the second prohibit timer are different timers; however, it can be understood that the values of the first prohibit timer and the second prohibit timer can be the same, that is, the duration corresponding to the first prohibit timer and the second prohibit timer can be the same.

Specifically, the first prohibit timer is associated with a periodic Gap preference, that is, after the UE transmits UAI containing a periodic Gap preference, the UE starts the first prohibit timer.

The second prohibit timer is associated with an aperiodic Gap preference. That is, after the UE transmits UAI containing an aperiodic Gap preference, the UE starts the second prohibit timer.

Further, after the UE transmits UAI containing both a periodic Gap preference and an aperiodic Gap preference, the UE starts both the first prohibit timer and the second prohibit timer.

In a possible implementation, in a case that a Gap preference associated with the prohibit timer is one or more periodic Gap preferences, the prohibit timer includes one or more first prohibit timers, each of the first prohibit timers being associated with one periodic Gap preference; and
in a case that the Gap preference associated with the prohibit timer is one or more aperiodic Gap preferences, the prohibit timer includes one or more second prohibit timers, each of the second prohibit timers being associated with one aperiodic Gap preference.

In the embodiment of this application, the target UAI to be reported by the UE can contain multiple Gap preferences, for example: containing 2 periodic Gap preferences and one aperiodic Gap preference, then for more refined control and management, two first prohibit timers and one second prohibit timer can be set, where the two first prohibit timers are associated with two periodic Gap preferences, ensuring that each target UAI containing a Gap preference can be associated with one prohibit timer.

In a possible implementation, the prohibit timer includes one common prohibit timer. That is, after the UE transmits UAI containing periodic Gap preferences or aperiodic Gap preferences, the UE starts the common prohibit timer, and UAI reporting control is performed through a common prohibit timer.

In a possible implementation, the target condition includes one or more of the following.
(1) Since the terminal being configured by the network device to provide the target UAI, the terminal has not transmitted the target UAI.
(2) Since the terminal being configured by the network device to provide the target UAI, the terminal has not transmitted a Gap type or Gap purpose contained in the target UAI.

The above-mentioned terminal being configured by the network to provide the target UAI refers to the network configuring the UE to allow the UE to report the target UAI. Specifically, the network can also configure the specific method of reporting the target UAI during configuration; the above (1) (2) refers to the fact that since the network configuration allowing the UE to report the target UAI, the UE has not transmitted the target UAI or the Gap type or Gap purpose contained in the target UAI. The Gap type includes a periodic Gap and/or an aperiodic Gap, and the Gap purpose includes a multi-card Gap, a Gap for receiving paging, a Gap for measurement, a Gap for one-time tasks, and the like;
(3) The terminal is configured by the network device to provide the target UAI;
(4) A Gap preference contained in the target UAI changes;

In the embodiments of this application, the target UAI includes one or more periodic Gap preferences and/or aperiodic gap preferences. The change in the Gap preference of the target UAI includes the change in the periodic gap preference or the change in the aperiodic gap preference, or, in a case that only the periodic gap preference was transmitted last time, this time the UE can transmit UAI containing the aperiodic gap preference.
(5) The Gap type contained in the target UAI is different from the Gap type contained in the UAI that has been transmitted; for example, in a case that UAI containing the periodic Gap preference has been transmitted and a corresponding Prohibit Timer is running, the UE can transmit UAI containing the aperiodic Gap preference.
(6) The gap purpose contained in the target UAI is different from a gap purpose contained in the UAI that has been transmitted; for example, in a case that UAI containing the periodic Gap preference for paging reception has been transmitted and a corresponding Prohibit Timer is running, the UE can transmit UAI containing the periodic Gap preference for measurement.
(7) The prohibit timer associated with the target UAI is not running; for example, in a case of an independent corresponding prohibit timer, when the prohibit timer associated with the UAI containing the aperiodic Gap preference is not running, the UE can transmit the UAI containing the aperiodic Gap preference.

For example, in a case of a common prohibit timer, that is, the common prohibit timer corresponds to both a periodic gap preference and an aperiodic Gap preference, when the prohibit timer corresponding to the aperiodic Gap preference assistance information is running, the UE cannot transmit UAI containing the periodic Gap preference.

(8) The target UAI includes a preference for leaving a connected state, and a timer for the preference for leaving a connected state is not running. The timer for the preference for leaving a connected state refers to the "configured time" Timer mentioned earlier.

In a possible implementation, this method further includes:
receiving, by the terminal, a first configuration from the network device, where the first configuration includes one or more of the following:
(1) values of one or more first prohibit timers, the first prohibit timer being associated with one or more periodic Gap preferences, where specifically, it can be that one prohibit timer is associated with one Gap preference, and correspondingly, there are multiple prohibit timers when there are multiple Gap preferences; or it can be that one prohibit timer is associated with multiple Gap preferences;
(2) values of one or more second prohibit timers, each of the second prohibit timers being associated with one or more aperiodic Gap preferences;
(3) a value of a common prohibit timer, the common prohibit timer being associated with one or more periodic Gap preferences as well as one or more aperiodic Gap preferences;
(4) a value of a timer for the preference for leaving a connected state, the timer for the preference for leaving a connected state being associated with the preference for leaving a connected state; and
(5) an indication allowing transmission of the target UAI.

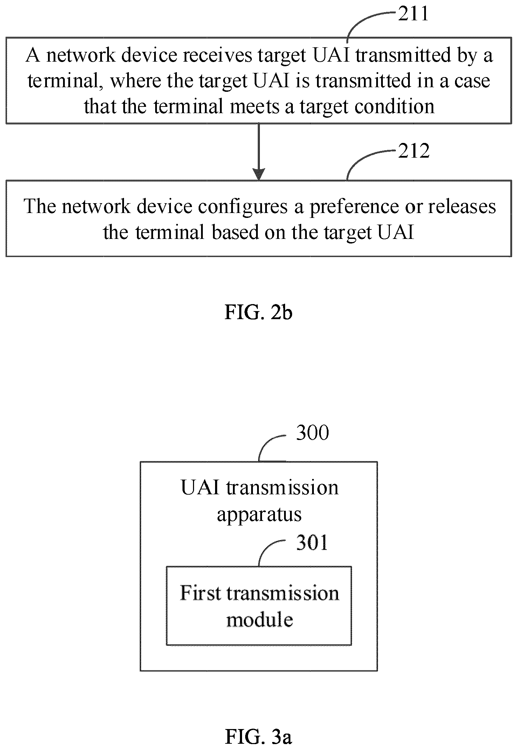

Referring to FIG. 2b, an embodiment of this application provides a UAI reception method. The method is performed by a network device, and specific steps are as follows.

Step 211. A network device receives target UAI transmitted by a terminal, where the target UAI is transmitted in a case that the terminal meets a target condition.

Step 212. The network device configures a Gap or releases the terminal based on the target UAI.

The target condition is associated with the target UAI and/or a prohibit timer associated with the target UAI, the target UAI includes one or more of a periodic gap Gap preference, an aperiodic Gap preference, and a preference for leaving a connected state, and the prohibit timer is associated with one or more periodic Gap preferences, and/or the prohibit timer is associated with one or more aperiodic Gap preferences.

In a possible implementation, this method further includes:
transmitting, by the network device, a first configuration to the terminal, where the first configuration includes one or more of the following:
values of one or more first prohibit timers, each of the first prohibit timers being associated with one or more periodic Gap preferences;
values of one or more second prohibit timers, each of the second prohibit timers being associated with one or more aperiodic Gap preferences;
a value of a common prohibit timer, the common prohibit timer being associated with one or more periodic Gap preferences as well as one or more aperiodic Gap preferences;
a value of a timer for the preference for leaving a connected state, the timer for the preference for leaving a connected state being associated with the preference for leaving a connected state; and
an indication allowing transmission of the target UAI.

The following describes the technical solutions in the embodiments of this application with reference to specific embodiments.

### Embodiment 1: Independent Prohibit Timer

1. The UE constructs a UAI message, optionally including:
   (1) one or more periodic Gap preferences;
   (2) one or more aperiodic Gap preferences; and
   (3) a preference for leaving a connected state.
2. In a case that the UAI message contains a periodic Gap preference, the first prohibit timer is started.
   Further, for multiple periodic Gap preferences, for example, a first periodic Gap preference is for paging reception, a second periodic Gap preference is for measurement, and the UE starts a 1A prohibit timer corresponding to the first periodic Gap preference, and the UE starts a 1B prohibit timer corresponding to the second periodic Gap preference.
3. In a case that the UAI message contains an aperiodic Gap preference, the second prohibit timer is started.
4. When the first prohibit timer is not running, the UE can transmit assistance information containing a periodic Gap preference.
5. Further, when the 1A prohibit timer is not running, the UE can transmit UAI containing the first periodic Gap preference.
   When the 1B prohibit timer is not running, the UE can transmit UAI containing the second periodic Gap preference.
6. When the second prohibit timer is not running, the UE can transmit UAI containing an aperiodic Gap preference.

### Embodiment 2: Common Prohibit Timer

1. The UE constructs a UAI message, optionally including:
   (1) one or more periodic Gap preferences;
   (2) one or more aperiodic Gap preferences; and
   (3) a preference for leaving a connected state.
2. In a case that the UAI message contains a periodic Gap preference or an aperiodic Gap preference, the common prohibit timer is started.
3. When the common prohibit timer is not running, the UE transmits UAI containing a periodic Gap preference or an aperiodic Gap preference.
4. Further, regardless of whether the common prohibit timer is running, the UE can transmit the target UAI after the UAI changes. The target UAI has a different gap type or Gap purpose from the last reported UAI.

Referring to FIG. 3a, an embodiment of this application provides a UAI transmission apparatus 300, including:
a first transmission module 301, configured for a terminal to transmit target UAI in a case that a target condition is met.

The target condition is associated with the target UAI and/or a prohibit timer associated with the target UAI, the target UAI includes one or more of a periodic Gap preference, an aperiodic Gap preference, and a preference for leaving a connected state, and the prohibit timer is associated with one or more periodic Gap preferences, and/or the prohibit timer is associated with one or more aperiodic Gap preferences.

In a possible implementation, in a case that a Gap preference associated with the prohibit timer is a periodic Gap preference, the prohibit timer includes a first prohibit timer; and
in a case that the Gap preference associated with the prohibit timer is an aperiodic Gap preference, the prohibit timer includes a second prohibit timer.

In a possible implementation, in a case that a Gap preference associated with the prohibit timer is one or more periodic Gap preferences, the prohibit timer includes one or more first prohibit timers, each of the first prohibit timers being associated with one periodic Gap preference; and
in a case that the Gap preference associated with the prohibit timer is one or more aperiodic Gap preferences, the prohibit timer includes one or more second prohibit timers, each of the second prohibit timers being associated with one aperiodic Gap preference.

In a possible implementation, the prohibit timer includes one common prohibit timer.

In a possible implementation, the target condition includes one or more of the following:
the terminal has not transmitted the target UAI since the terminal being configured by the network device to provide the target UAI;
the terminal has not transmitted a Gap type or Gap purpose contained in the target UAI since the terminal being configured by the network device to provide the target UAI;
the terminal is configured by the network device to provide the target UAI;
a Gap preference contained in the target UAI changes;
the Gap type contained in the target UAI is different from a Gap type contained in the UAI that has been transmitted;
the gap purpose contained in the target UAI is different from a gap purpose contained in the UAI that has been transmitted;
the prohibit timer associated with the target UAI is not running; and
the target UAI includes a preference for leaving a connected state, and a timer for the preference for leaving a connected state is not running.

In a possible implementation, the target UAI includes multi-card UAI, and the multi-card UAI includes one or more of the following:
a periodic Gap preference;
an aperiodic Gap preference; and
a preference for leaving a connected state.

In a possible implementation, the apparatus further includes:
a reception module, configured to receive a first configuration from the network device, where the first configuration includes one or more of the following:
values of one or more first prohibit timers, each of the first prohibit timers being associated with one or more periodic Gap preferences;
values of one or more second prohibit timers, each of the second prohibit timers being associated with one or more aperiodic Gap preferences;
a value of a common prohibit timer, the common prohibit timer being associated with one or more periodic Gap preferences as well as one or more aperiodic Gap preferences;
a value of a timer for the preference for leaving a connected state, the timer for the preference for leaving a connected state being associated with the preference for leaving a connected state; and
an indication allowing transmission of the target UAI.

Thus, in a case that the UE reports multiple pieces of assistance information or performs reporting multiple times, the delay in reporting assistance information is reduced through reasonable control of the prohibit timer, avoiding an impact on the multi-card user experience.

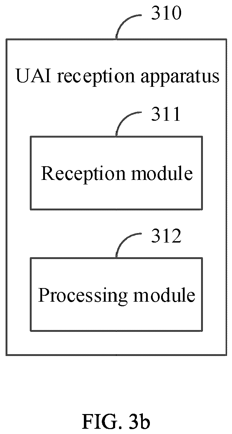

Referring to FIG. 3b, an embodiment of this application provides a UAI reception apparatus 310, including:
a reception module 311, configured to receive target UAI transmitted by a terminal, where the target UAI is transmitted in a case that the terminal meets a target condition; and
a processing module 312, configured to configure for the network device a Gap or release the terminal based on the target UAI.

The target condition is associated with the target UAI and/or a prohibit timer associated with the target UAI, the target UAI includes one or more of a periodic gap Gap preference, an aperiodic Gap preference, and a preference for leaving a connected state, and the prohibit timer is associated with one or more periodic Gap preferences, and/or the prohibit timer is associated with one or more aperiodic Gap preferences.

In a possible implementation, the apparatus further includes:
a second transmission module, configured to transmit a first configuration to the terminal, where the first configuration includes one or more of the following:
values of one or more first prohibit timers, each of the first prohibit timers being associated with one or more periodic Gap preferences;
values of one or more second prohibit timers, each of the second prohibit timers being associated with one or more aperiodic Gap preferences;
a value of a common prohibit timer, the common prohibit timer being associated with one or more periodic Gap preferences as well as one or more aperiodic Gap preferences;
a value of a timer for the preference for leaving a connected state, the timer for the preference for leaving a connected state being associated with the preference for leaving a connected state; and
an indication allowing transmission of the target UAI.

Thus, in a case that the UE reports multiple pieces of assistance information or performs reporting multiple times, the delay in reporting assistance information is reduced through reasonable control of the prohibit timer, avoiding an impact on the multi-card user experience.

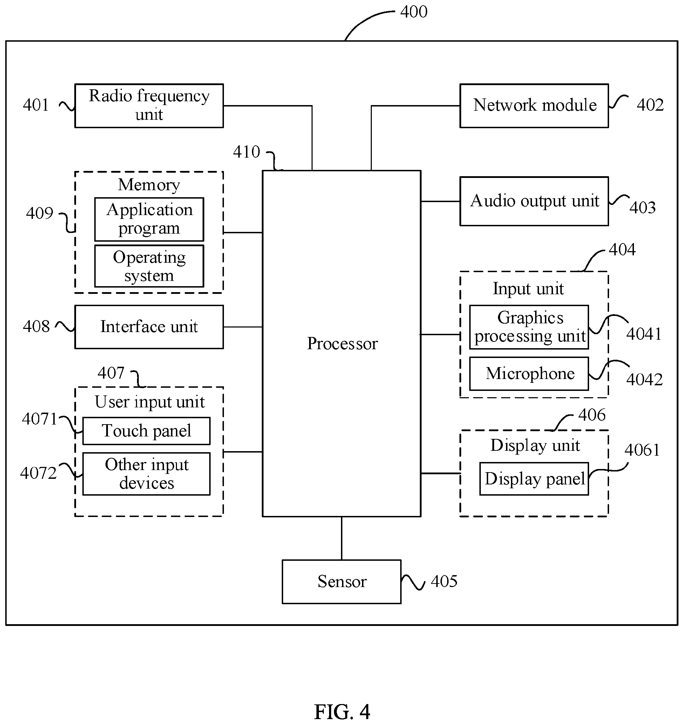

FIG. 4 is a schematic diagram of a hardware structure of a terminal implementing an embodiment of this application.

The terminal 400 includes but is not limited to components such as a radio frequency unit 401, a network module 402, an audio output unit 403, an input unit 404, a sensor 405, a display unit 406, a user input unit 407, an interface unit 408, a memory 409, and a processor 410.

It can be understood by those skilled in the art that the terminal 400 may further include a power supply (for example, a battery) supplying power to the components. The power supply may be logically connected to the processor 410 via a power management system, so that functions such as charge management, discharge management, and power consumption management are implemented by using the power management system. The structure of the terminal shown in FIG. 4 does not constitute a limitation on the terminal. The terminal may include more or fewer components than illustrated in the figure, or combine some components, or have a different component arrangement. Details are not described herein again.

It should be understood that in this embodiment of this application, the input unit 404 may include a graphics processing unit (Graphics Processing Unit, GPU) 4041 and a microphone 4042. The graphics processing unit 4041 processes image data of a static picture or a video that is obtained by an image capture apparatus (for example, a camera) in a video capture mode or an image capture mode. The display unit 406 may include a display panel 4061. The display panel 4061 may be configured in a form of a liquid crystal display, an organic light-emitting diode display, or the like. The user input unit 407 includes a touch panel 4061 and another input device 4072. The touch panel 4061 is also referred to as a touchscreen. The touch panel 4061 may include two parts: a touch detection apparatus and a touch controller. The another input device 4072 may include but is not limited to a physical keyboard, a function button (such as a volume control button or a power button), a trackball, a mouse, and a joystick. Details are not described now.

In this embodiment of this application, the radio frequency unit 401 transmits downlink data received from a network-side device to the processor 410 for processing, and in addition, transmits uplink data to the network-side device. Generally, the radio frequency unit 401 includes but is not limited to an antenna, at least one amplifier, a transceiver, a coupler, a low noise amplifier, a duplexer, and the like.

The memory 409 may be configured to store software programs or instructions and various data. The memory 409 may include a program or instruction storage area and a data storage area. The program or instruction storage area may store an operating system, an application program or instructions required by at least one function (for example, sound play function or image play function), and the like. In addition, the memory 409 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other volatile solid-state storage device.

The processor 410 may include one or more processing units. Optionally, an application processor and a modem processor may be integrated in the processor 410. The application processor primarily processes an operating system, user interfaces, application programs or instructions, and the like. The modem processor primarily processes radio communication, for example, being a baseband processor. It can be understood that the modem processor may alternatively be not integrated in the processor 410.

The processor 410 for a terminal to transmit target UAI in a case that a target condition is met.

The target condition is associated with the target UAI and/or a prohibit timer associated with the target UAI, the target UAI includes one or more of a periodic Gap preference, an aperiodic Gap preference, and a preference for leaving a connected state, and the prohibit timer is associated with one or more periodic Gap preferences, and/or the prohibit timer is associated with one or more aperiodic Gap preferences.

In a possible implementation, in a case that a Gap preference associated with the prohibit timer is a periodic Gap preference, the prohibit timer includes a first prohibit timer; and
in a case that the Gap preference associated with the prohibit timer is an aperiodic Gap preference, the prohibit timer includes a second prohibit timer.

In a possible implementation, in a case that a Gap preference associated with the prohibit timer is one or more periodic Gap preferences, the prohibit timer includes one or more first prohibit timers, each of the first prohibit timers being associated with one periodic Gap preference; and
in a case that the Gap preference associated with the prohibit timer is one or more aperiodic Gap preferences, the prohibit timer includes one or more second prohibit timers, each of the second prohibit timers being associated with one aperiodic Gap preference.

In a possible implementation, the prohibit timer includes one common prohibit timer.

In a possible implementation, the target condition includes one or more of the following:
the terminal has not transmitted the target UAI since the terminal being configured by a network to provide the target UAI;
the terminal has not transmitted a Gap type or Gap purpose contained in the target UAI since a time the terminal being configured by the network to provide the target UAI;
the terminal is configured by the network to provide the target UAI;
a Gap preference contained in the target UAI changes;
the Gap type contained in the target UAI is different from a Gap type contained in the UAI that has been transmitted;
the gap purpose contained in the target UAI is different from a gap purpose contained in the UAI that has been transmitted;
the prohibit timer associated with the target UAI is not running; and
the target UAI includes a preference for leaving a connected state, and a timer for the preference for leaving a connected state is not running.

In a possible implementation, the target UAI includes multi-card UAI, and the multi-card UAI includes one or more of the following:
a periodic Gap preference;
an aperiodic Gap preference; and
a preference for leaving a connected state.

In a possible implementation, the processor 410 is further configured to receive a first configuration from a network device before the terminal transmits the target UAI, where the first configuration includes one or more of the following:
values of one or more first prohibit timers, each of the first prohibit timers being associated with one or more periodic Gap preferences;
values of one or more second prohibit timers, each of the second prohibit timers being associated with one or more aperiodic Gap preferences;
a value of a common prohibit timer, the common prohibit timer being associated with one or more periodic Gap preferences as well as one or more aperiodic Gap preferences;
a value of a timer for the preference for leaving a connected state, the timer for the preference for leaving a connected state being associated with the preference for leaving a connected state; and
an indication allowing transmission of the target UAI.

Thus, in a case that the UE reports multiple pieces of assistance information or performs reporting multiple times, the delay in reporting assistance information is reduced through reasonable control of the prohibit timer, avoiding an impact on the multi-card user experience.

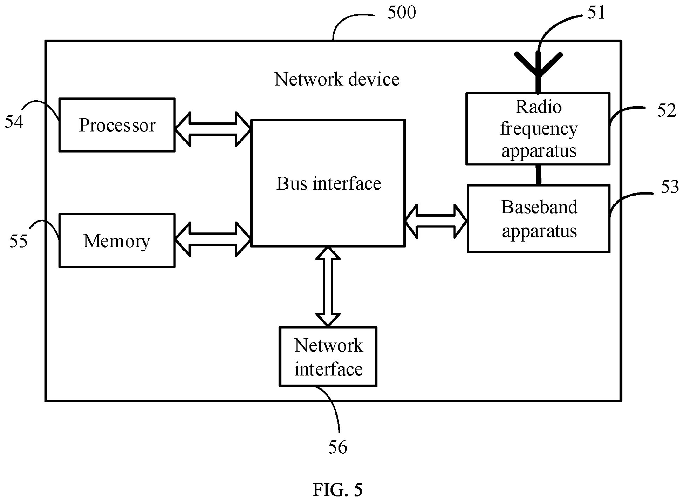

Specifically, an embodiment of this application further provides a network-side device. As shown in FIG. 5, the network device 500 includes an antenna 51, a radio frequency apparatus 52, and a baseband apparatus 53. The antenna 51 is connected to the radio frequency apparatus 52. In an uplink direction, the radio frequency apparatus 52 receives information by using the antenna 51, and transmits the received information to the baseband apparatus 53 for processing. In a downlink direction, the baseband apparatus 53 processes to-be-transmitted information, and transmits the information to the radio frequency apparatus 52; and the radio frequency apparatus 52 processes the received information and then transmits the information out by using the antenna 51.

The frequency band processing apparatus may be located in the baseband apparatus 53. The method executed by the network-side device in the foregoing embodiments may be implemented in the baseband apparatus 53, and the baseband apparatus 53 includes a processor 54 and a memory 55.

The baseband apparatus 53 may include, for example, at least one baseband processing unit, where a plurality of chips are disposed on the baseband processing unit. As shown in FIG. 5, one of the chips is, for example, the processor 54, and connected to the memory 55, to invoke the program in the memory 55 to perform the operations of the network device shown in the foregoing method embodiment.

The baseband apparatus 53 may further include a network interface 56, configured to exchange information with the radio frequency apparatus 52, where the interface is, for example, a common public radio interface (Common Public Radio Interface, CPRI).

Specifically, the network-side device in this embodiment of the present application further includes instructions or a program stored in the memory 55 and capable of running on the processor 54. The processor 54 invokes the instructions or program in the memory 55 to perform the method performed by the modules shown in FIG. 3b, with the same technical effects achieved. To avoid repetition, details are not described herein again.

An embodiment of this application further provides a program product, where the program product is stored in a non-volatile storage medium, and the program product is executed by at least one processor to implement the steps of the processing method in FIG. 2.

An embodiment of this application further provides a readable storage medium, where the readable storage medium stores a program or instructions, and when the program or instructions are executed by a processor, the processes of the foregoing method embodiments shown in FIG. 2 are implemented, with the same technical effects achieved. To avoid repetition, details are not described herein again.

The processor is a processor in the terminal described in the foregoing embodiment. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions for a network-side device, to implement the processes of the method embodiments shown in FIG. 2, with the same technical effects achieved. To avoid repetition, details are not described herein again.

It should be understood that the chip mentioned in an embodiment of this application may also be referred to as a system-level chip, a system chip, a chip system, a system-on-chip, or the like.

An embodiment of this application further provides a computer program product, where the computer program product is stored in a non-transitory storage medium. When the computer program product is executed by at least one processor, the processes of the foregoing method embodiment in FIG. 2 are implemented, with the same technical effects achieved. To avoid repetition, details are not described herein again.

An embodiment of this application further provides a communication device configured to execute the processes of the method embodiment in FIG. 2, with the same technical effects achieved. To avoid repetition, details are not described herein again.

It should be noted that in this specification, the terms "comprise" and "include", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more restrictions, an element preceded by the statement "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

According to the description of the foregoing embodiments, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred embodiment. Based on such an understanding, the technical solutions of this application essentially, or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A UE assistance information UAI transmission method, comprising:
transmitting, by a terminal, target UAI to a network device in a case that a target condition is met; wherein
the target condition is associated with the target UAI and/or a prohibit timer associated with the target UAI, the target UAI comprises one or more of a periodic gap preference, an aperiodic Gap preference, and a preference for leaving a connected state, and the prohibit timer is associated with one or more periodic Gap preferences, and/or the prohibit timer is associated with one or more aperiodic Gap preferences.

2. The method according to claim 1, wherein in a case that the Gap preference associated with the prohibit timer is a periodic Gap preference, the prohibit timer comprises a first prohibit timer; and
in a case that the Gap preference associated with the prohibit timer is an aperiodic Gap preference, the prohibit timer comprises a second prohibit timer.

3. The method according to claim 2, wherein in a case that the Gap preference associated with the prohibit timer is one or more periodic Gap preferences, the prohibit timer comprises one or more first prohibit timers, each of the first prohibit timers being associated with one periodic Gap preference; and
in a case that the Gap preference associated with the prohibit timer is one or more aperiodic Gap preferences, the prohibit timer comprises one or more second prohibit timers, each of the second prohibit timers being associated with one aperiodic Gap preference.

4. The method according to claim 1, wherein the prohibit timer comprises a common prohibit timer.

5. The method according to claim 1, wherein the target condition comprises one or more of the following:
the terminal has not transmitted the target UAI since the terminal being configured by the network device to provide the target UAI;
the terminal has not transmitted a Gap type or Gap purpose contained in the target UAI since the terminal being configured by the network device to provide the target UAI;
the terminal is configured by the network device to provide the target UAI;
a Gap preference contained in the target UAI changes;
the Gap type contained in the target UAI is different from a Gap type contained in the UAI that has been transmitted;
the gap purpose contained in the target UAI is different from a gap purpose contained in the UAI that has been transmitted;
the prohibit timer associated with the target UAI is not running; and
the target UAI comprises a preference for leaving a connected state, and a timer for the preference for leaving a connected state is not running.

6. The method according to claim 1, wherein the target UAI comprises multi-card UAI, and the multi-card UAI comprises one or more of the following:
a periodic Gap preference;
an aperiodic Gap preference; and
a preference for leaving a connected state.

7. The method according to claim 1, wherein before the transmitting, by a terminal, a target UAI to a network device, the method further comprises:
receiving, by the terminal, a first configuration from the network device, wherein the first configuration comprises one or more of the following:
values of one or more first prohibit timers, each of the first prohibit timers being associated with one or more periodic Gap preferences;
values of one or more second prohibit timers, each of the second prohibit timers being associated with one or more aperiodic Gap preferences;
a value of a common prohibit timer, the common prohibit timer being associated with one or more periodic Gap preferences as well as one or more aperiodic Gap preferences;
a value of a timer for the preference for leaving a connected state, the timer for the preference for leaving a connected state being associated with the preference for leaving a connected state; and
an indication allowing transmission of the target UAI.

8. A UAI reception method, comprising:
receiving, by a network device, target UAI transmitted by a terminal, wherein the target UAI is transmitted in a case that the terminal meets a target condition; and
configuring a Gap or releasing the terminal by the network device based on the target UAI; wherein
the target condition is associated with the target UAI and/or a prohibit timer associated with the target UAI, the target UAI comprises one or more of a periodic gap Gap preference, an aperiodic Gap preference, and a preference for leaving a connected state, and the prohibit timer is associated with one or more periodic Gap preferences, and/or the prohibit timer is associated with one or more aperiodic Gap preferences.

9. The method according to claim 8, wherein the method further comprises:
transmitting, by the network device, a first configuration to the terminal, wherein the first configuration comprises one or more of the following:
values of one or more first prohibit timers, each of the first prohibit timers being associated with one or more periodic Gap preferences;
values of one or more second prohibit timers, each of the second prohibit timers being associated with one or more aperiodic Gap preferences;
a value of a common prohibit timer, the common prohibit timer being associated with one or more periodic Gap preferences as well as one or more aperiodic Gap preferences;
a value of a timer for the preference for leaving a connected state, the timer for the preference for leaving a connected state being associated with the preference for leaving a connected state; and
an indication allowing transmission of the target UAI.

10. A UAI transmission apparatus, comprising:
a first transmission module configured to transmit target UAI to a network device in a case that a target condition is met; wherein
the target condition is associated with the target UAI and/or a prohibit timer associated with the target UAI, the target UAI comprises one or more of a periodic Gap preference, an aperiodic Gap preference, and a preference for leaving a connected state, and the prohibit timer is associated with one or more periodic Gap preferences, and/or the prohibit timer is associated with one or more aperiodic Gap preferences.

11. The apparatus according to claim 10, wherein in a case that the Gap preference associated with the prohibit timer is a periodic Gap preference, the prohibit timer comprises a first prohibit timer; and
in a case that the Gap preference associated with the prohibit timer is an aperiodic Gap preference, the prohibit timer comprises a second prohibit timer.

12. The apparatus according to claim 11, wherein in a case that the Gap preference associated with the prohibit timer is one or more periodic Gap preferences, the prohibit timer comprises one or more first prohibit timers, each of the first prohibit timers being associated with one periodic Gap preference; and
in a case that the Gap preference associated with the prohibit timer is one or more aperiodic Gap preferences, the prohibit timer comprises one or more second prohibit timers, each of the second prohibit timers being associated with one aperiodic Gap preference.

13. The apparatus according to claim 10, wherein the prohibit timer comprises one common prohibit timer.

14. The apparatus according to claim 10, wherein the target condition comprises one or more of the following:
the terminal has not transmitted the target UAI since a terminal being configured by a network to provide the target UAI;
the terminal has not transmitted a Gap type or Gap purpose contained in the target UAI since the terminal being configured by the network to provide the target UAI;
the terminal is configured by the network to provide the target UAI;
a Gap preference contained in the target UAI changes;
the Gap type contained in the target UAI is different from a Gap type contained in the UAI that has been transmitted;
the gap purpose contained in the target UAI is different from a gap purpose contained in the UAI that has been transmitted;
the prohibit timer associated with the target UAI is not running; and
the target UAI comprises a preference for leaving a connected state, and a timer for the preference for leaving a connected state is not running.

15. The apparatus according to claim 10, wherein the target UAI comprises multi-card UAI, and the multi-card UAI comprises one or more of the following:
a periodic Gap preference;
an aperiodic Gap preference; and
a preference for leaving a connected state.

16. The apparatus according to claim 10, wherein the apparatus further comprises:
a reception module, configured to receive a first configuration from the network device before the target UAI is transmitted to the network device, wherein the first configuration comprises one or more of the following:
values of one or more first prohibit timers, each of the first prohibit timers being associated with one or more periodic Gap preferences;
values of one or more second prohibit timers, each of the second prohibit timers being associated with one or more aperiodic Gap preferences;
a value of a common prohibit timer, the common prohibit timer being associated with one or more periodic Gap preferences as well as one or more aperiodic Gap preferences;
a value of a timer for the preference for leaving a connected state, the timer for the preference for leaving a connected state being associated with the preference for leaving a connected state; and
an indication allowing transmission of the target UAI.

17. A UAI reception apparatus, comprising:
a reception module, configured to receive target UAI transmitted by a terminal, wherein the target UAI is transmitted in a case that the terminal meets a target condition; and
a processing module, configured for the network device to configure a Gap or release the terminal based on the target UAI; wherein
the target condition is associated with the target UAI and/or a prohibit timer associated with the target UAI, the target UAI comprises one or more of a periodic gap Gap preference, an aperiodic Gap preference, and a preference for leaving a connected state, and the prohibit timer is associated with one or more periodic Gap preferences, and/or the prohibit timer is associated with one or more aperiodic Gap preferences.

18. The apparatus according to claim 17, wherein the apparatus further comprises:
a second transmission module, configured to transmit a first configuration to the terminal, wherein the first configuration comprises one or more of the following:
values of one or more first prohibit timers, each of the first prohibit timers being associated with one or more periodic Gap preferences;
values of one or more second prohibit timers, each of the second prohibit timers being associated with one or more aperiodic Gap preferences;
a value of a common prohibit timer, the common prohibit timer being associated with one or more periodic Gap preferences as well as one or more aperiodic Gap preferences;
a value of a timer for the preference for leaving a connected state, the timer for the preference for leaving a connected state being associated with the preference for leaving a connected state; and
an indication allowing transmission of the target UAI.

19. A terminal, comprising a processor, a memory, and a program stored in the memory and capable of running on the processor, wherein when the program is executed by the processor, the steps of the method according to any one of claims 1 to 7 are implemented.

20. A network device, comprising a processor, a memory, and a program stored in the memory and capable of running on the processor, wherein when the program is executed by the processor, the steps of the method according to any one of claims 8 and 9 are implemented.

21. A readable storage medium, wherein the readable storage medium stores a program or instructions, and when the program or instructions are executed by a processor, the steps of the method according to any one of claims 1 to 7 or the steps of the method according to any one of claims 8 and 9 are implemented.

22. A chip, comprising a processor and a communication interface, wherein the communication interface is coupled to the processor, and the processor is configured to run a program or instructions to implement the steps of the method according to any one of claims 1 to 7 or to implement the steps of the method according to any one of claims 8 and 9.

23. A computer program product, wherein the computer program product is stored in a non-volatile storage medium, and the computer program product is executed by at least one processor to implement the steps of the method according to any one of claims 1 to 7 or to implement the steps of the method according to any one of claims 8 and 9.

24. A communication device, wherein the communication device is configured to perform the steps of the method according to any one of claims 1 to 7 or is configured to perform the steps of the method according to any one of claims 8 and 9.
